# EUROPEAN PATENT APPLICATION

(11) **EP 4 811 436 A1**
(43) Date of publication of application: **23.09.2026**
(21) Application number: 24890134.0
(22) Date of filing: 04.07.2024
(51) Int. Cl.: H01M 4/131, H01M 4/36

(54) **POSITIVE ELECTRODE SHEET, SODIUM-ION SECONDARY BATTERY, AND ELECTRIC DEVICE**

(30) Priority: 16.11.2023 CN 202311531803
(71) Applicant: Contemporary Amperex Technology Co., Limited, Ningde, Fujian 352100 (CN)
(72) Inventor: WU, Kai, Ningde, Fujian 352100 (CN); XU, Baoyun, Ningde, Fujian 352100 (CN); TANG, Zheng, Ningde, Fujian 352100 (CN)
(74) Representative: Ziebig Hengelhaupt Intellectual Property Attorneys Patentanwaltskanzlei PartGmbB
(86) International application number: PCT/CN2024/103550
(87) International publication number: WO 2025/102765

(57) **Abstract**

The present application relates to the technical field of batteries, and in particular, relates to a positive electrode plate, a sodium-ion secondary battery, and an electrical apparatus. The positive electrode plate comprises a sodium-supplementing agent and a positive electrode active material, wherein the sodium-supplementing agent includes Na_{q}MnₓM_{y}O₂, where 1≤q≤1.2, 0.15≤x<0.45, y>0, 0.9≤x+y≤1, and M includes a transition metal element; and Dv50 of the sodium-supplementing agent is smaller than Dv50 of the positive electrode active material. The sodium-supplementing agent Na_{q}MnₓM_{y}O₂ of the present application has relatively high structural instability and is prone to deintercalating sodium; and the particle size of the sodium-supplementing agent is smaller than the particle size of the positive electrode active material, such that the sodium-supplementing agent has higher reaction activity than the positive electrode active material, and can preferentially, compared with the positive electrode active material, deintercalate sodium ions to participate in an electrochemical reaction, which facilitates reducing the consumption of active sodium contained in the positive electrode active material during an early-stage charging and discharging process of a battery, thereby alleviating structural damage of the positive electrode active material and improving the cycling performance of the battery.

## Description

The present application claims priority to Chinese Patent Application No. 202311531803.5 filed with the China National Intellectual Property Administration on November 16, 2023 and entitled "POSITIVE ELECTRODE PLATE, SODIUM-ION SECONDARY BATTERY, AND ELECTRICAL APPARATUS", which is incorporated herein by reference in its entirety.

### TECHNICAL FIELD

The present application relates to the technical field of batteries, and specifically, relates to a positive electrode plate, a sodium-ion secondary battery, and an electrical apparatus.

### BACKGROUND

Sodium-ion batteries have a working mechanism similar to that of lithium-ion batteries, which realize the conversion between chemical energy and electric energy mainly through the deintercalation and intercalation of sodium ions between the positive electrode and the negative electrode. That is, during the charging process, sodium ions are deintercalated from the active material of the positive electrode, and then intercalated into the active material of the negative electrode after being transported through the electrolyte; during the discharging process, sodium ions are deintercalated again from the active material of the negative electrode and return to the active material of the positive electrode.

It has been found in practice that sodium-ion batteries are prone to capacity fading and poor cycling performance during charge and discharge, which restricts the development of sodium-ion batteries.

### SUMMARY

The embodiments of the present application aim to provide a positive electrode plate, a sodium-ion secondary battery, and an electrical apparatus so as to solve the problem of poor cycling performance of sodium-ion batteries.

### Technical solutions

The technical solutions adopted by the embodiments of the present application are as follows:
In a first aspect, embodiments of the present application provide a positive electrode plate, the positive electrode plate comprises a sodium-supplementing agent and a positive electrode active material, the sodium-supplementing agent comprises Na_{q}MnₓM_{y}O₂, where 1≤q≤1.2m 0.15≤x<0.45, y>0, 0.9≤x+y≤1, the M comprises a transition metal element; the Dv50 of the sodium-supplementing agent is smaller than the Dv50 of the positive electrode active material.

Embodiments of the present application adopt an Mn-based sodium-supplementing oxide Na_{q}MnₓM_{y}O₂ as a sodium-supplementing agent by incorporating it into the positive electrode plate, the Mn in Na_{q}MnₓM_{y}O₂ includes unstable Mn³⁺, which endows Na_{q}MnₓM_{y}O₂ with relatively high structural instability and facilitates sodium deintercalation (in this process, Mn³⁺ can be converted into stable Mn⁴⁺). Therefore, during the early-stage charging and discharging process of the battery, Na_{q}MnₓM_{y}O₂ can be used as the active sodium source consumed for forming the solid electrolyte interphase film (SEI film). This reduces the consumption of active sodium contained in the positive electrode active material during the early-stage charging and discharging process of the battery, alleviates structural damage to the positive electrode active material, and helps improve the cycling performance of the battery.

Meanwhile, small-particle-size materials generally have higher reaction activity than large-particle-size materials. In the embodiments of the present application, the particle size of the sodium-supplementing agent is set to be smaller than that of the positive electrode active material. This endows the sodium-supplementing agent with higher reaction activity than the positive electrode active material and faster kinetics during the early-stage charging and discharging process of the battery. Accordingly, sodium ions can be preferentially deintercalated from the sodium-supplementing agent prior to the positive electrode active material to support the formation of the SEI film. This further reduces the consumption of active sodium in the positive electrode active material and improves the cycling performance of the battery.

In some embodiments, 1≤q≤1.1. q can reflect the Na content in Na_{q}MnₓM_{y}O₂. Setting q within these ranges not only enables Na_{q}MnₓM_{y}O₂ to provide sodium ions and reduce the consumption of active sodium contained in the positive electrode active material during the first-cycle charging process, which is beneficial to increasing the capacity of the positive electrode plate and improving the cycling performance of the battery, but also endows the sodium-supplementing agent with excellent structural stability after sodium deintercalation.

In some embodiments, 0.2≤x≤0.44. x reflects the Mn content in Na_{q}MnₓM_{y}O₂. The Mn in Na_{q}MnₓM_{y}O₂ includes unstable Mn³⁺. Setting x within the above range enables Na_{q}MnₓM_{y}O₂ to contain a sufficient amount of Mn³⁺, endowing the structure of Na_{q}MnₓM_{y}O₂ with relatively high instability and facilitating sodium deintercalation. This is conducive to achieving the sodium supplementing effect. Furthermore, Mn exhibits different valence states in different structures and can adapt to conditions with varying Na contents. That is to say, it can adjust its own valence state to allow more Na to be incorporated into Na_{q}MnₓM_{y}O₂, which helps increase the Na content in Na_{q}MnₓM_{y}O₂, and further contributes to enhancing the capacity of the positive electrode plate and improving the cycling performance of the battery.

In some embodiments, 0.5≤y≤0.8. y reflects the content of transition metal M in Na_{q}MnₓM_{y}O₂. Appropriate doping of M into Na_{q}MnₓM_{y}O₂ helps improve the structural stability of Na_{q}MnₓM_{y}O₂ after sodium deintercalation, and prevents serious structural collapse of Na_{q}MnₓM_{y}O₂ during the sodium deintercalation process.

In some embodiments, the M includes one or more of Fe, Ni, Co, Cu, Al, Ti, and V. These transition metals help enhance the structural stability of Na_{q}MnₓM_{y}O₂ after sodium deintercalation.

In some embodiments, the M includes Fe and Ni, and the sodium-supplementing agent includes Na_{q}MnₓNi_{y1}Fe_{y2}O₂, where 1≤q≤1.2, 0.15≤x<0.45, y1>0, y2>0, 0.9≤x+y1+y2≤1. The combination of transition metals Ni and Fe can form a stable metallic layer structure with Mn. Moreover, studies have shown that the combined use of Ni and Fe is conducive to improving the energy density of the material.

In some embodiments, the phase structure of the sodium-supplementing agent includes an O3 phase. In different phase structures, Na⁺ has different coordination environments and contents. The sodium-supplementing agent according to the embodiments of the present application comprises an O3 phase. The O3 phase is a phase structure with a high sodium content, thereby enabling the sodium-supplementing agent to provide a large amount of sodium.

In some embodiments, the Dv50 of the sodium-supplementing agent is 6% to 75% of the Dv50 of the positive electrode active material, and optionally 6% to 25%. The particle size of the sodium-supplementing agent is set to be smaller than that of the positive electrode active material. This endows the sodium-supplementing agent with higher reaction activity than the positive electrode active material and faster kinetics during the first-cycle charging and the early cycling process of the battery. Accordingly, sodium ions can be preferentially deintercalated from the sodium-supplementing agent prior to the positive electrode active material to support the formation of the SEI film. This reduces the consumption of active sodium in the positive electrode active material and improves the cycling performance of the battery. Meanwhile, when there is a certain difference between the Dv50 of the sodium-supplementing agent and the Dv50 of the positive electrode active material, the battery can exhibit superior cycling performance.

In some embodiments, the Dv50 of the sodium-supplementing agent is 0.5 µm to 6 µm, optionally 1 µm to 3 µm. At this particle size, the sodium-supplementing agent possesses a high specific surface area and high surface energy, while also enabling a short sodium transport path, which is beneficial to enhancing its reaction activity and promoting sodium deintercalation.

In some embodiments, the Dv50 of the positive electrode active material is 6 µm to 20 µm, optionally 6 µm to 10 µm. At this particle size, the positive electrode active material exhibits lower reaction activity than the sodium-supplementing agent. It can deintercalate sodium ions slowly during the early-stage charging and discharging process of the battery rather than deintercalating sodium ions preferentially, thereby slowing down the consumption of active sodium in the positive electrode active material. Furthermore, by compounding the positive electrode active material and the sodium-supplementing agent with different particle sizes, the small-particle-size sodium-supplementing agent can fill the gaps between large-particle-size positive electrode active material particles, which helps increase the compacted density of the positive electrode plate and further improve the energy density of the positive electrode plate.

In some embodiments, the mass ratio of the sodium-supplementing agent to the positive electrode active material is 1:(14-95), optionally 1:(18-46.5). The mass ratio of the sodium-supplementing agent to the positive electrode active material affects the cycling performance of sodium-ion batteries. At the above mass ratio, sodium-ion batteries can exhibit excellent cycling performance.

In some embodiments, the mass content of the sodium-supplementing agent in the active layer contained in the positive electrode plate is 1% to 6%, optionally 2% to 5%. The addition of a small amount of the sodium-supplementing agent according to the embodiments of the present application into the active layer contained in the positive electrode plate can effectively achieve a sodium supplementing effect and improve the cycling performance of the battery.

In some embodiments, the positive electrode active material includes one or more of layered oxides, polyanionic compounds, and Prussian blue analog compounds. Optionally, the layered oxide includes NaₘM¹_{z}O₂, where 0.4≤m≤0.9 and 0.9≤z≤1; and M¹ includes transition metal elements. The positive electrode plate according to the embodiments of the present application is applicable to various positive electrode active materials, and can alleviate structural damage of these positive electrode active materials during battery cycling, thereby improving the cycling performance of the battery.

In a second aspect, the present application provides a sodium-ion secondary battery, wherein the sodium-ion secondary battery comprises the positive electrode plate according to the first aspect.

The above positive electrode plate contains a sodium-supplementing agent with a special structure, and the sodium-supplementing agent is combined with the positive electrode active material at a specific particle size matching. When the positive electrode plate is applied to a sodium-ion secondary battery, it is conducive to improving the cycling performance of the sodium-ion secondary battery.

In a third aspect, the present application provides an electrical apparatus, and the electrical apparatus comprises the sodium-ion secondary battery according to the second aspect.

The sodium-ion secondary battery disclosed by the examples of the present application can be used in the electrical apparatus using the secondary battery as a power source, or various energy storage systems using the battery as an energy storage element, so as to be used to provide electric energy. The above sodium-ion secondary battery exhibits excellent cycling performance. Therefore, the adoption of the above sodium-ion secondary battery can stably supply electric energy to various electrical apparatuses and optimize the service experience of various electrical apparatuses.

### BRIEF DESCRIPTION OF THE DRAWINGS

In order to explain the technical scheme in the embodiments of this application more clearly, the accompanying drawings needed in the description of the embodiments or demonstration technical descriptions will be briefly introduced below. Obviously, the accompanying drawings in the following description are only some embodiments of the application. For a person of ordinary skill in the art, other drawings can be obtained according to these accompanying drawings without creative work.
FIG. 1 is a schematic diagram of a secondary battery according to an embodiment of the present application;
FIG. 2 is an exploded view of a secondary battery according to an embodiment of the present application as shown in FIG. 1;
FIG. 3 is a schematic diagram of a battery module in an embodiment of the present application;
FIG. 4 is a schematic diagram of a battery pack in an embodiment of the present application;
FIG. 5 is an exploded view of the battery pack in an embodiment of the present application shown in FIG. 4;
FIG. 6 is a schematic diagram of an electrical apparatus in which a secondary battery is used as a power source in an embodiment of the present application.

Reference numerals:
Case 01, Cover plate 02, Electrode assembly 03, Battery cell 04, Battery module 05, Upper box 06, Lower box 07.

### DETAILED DESCRIPTION

The embodiments of the technical solutions of the present application will be described in detail below with reference to the accompanying drawings. The following embodiments are only used to illustrate the technical solutions of the present application more clearly, and thus are only interpreted as examples, rather than used to limit the scope of protection of the present application.

Unless otherwise defined, all technical and scientific terms used herein have the same meanings as those commonly understood by those skilled in the art of the present application. The terms used herein are intended only for the purpose of describing specific embodiments and are not intended to limit the present application. The terms "including" and "having" and any variations thereof in the specification and claims of the present application and in the description of the aforementioned accompanying drawings are intended to cover non-exclusive inclusion.

In the description of the embodiments of the present application, the technical terms "first", "second", etc., are only used for distinguishing different objects, and cannot be understood as indicating or implying relative importance or implying the number, specific order or primary and secondary relationship of the technical features indicated. In the description of the embodiments of the present application, the meaning of "a plurality of" is two or more, unless otherwise explicitly and specifically defined.

The "embodiment" mentioned herein means that specific features, structures, or characteristics described with reference to the embodiment may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiment of the present application, the term "and/or" is merely an association relationship that describes the associated object, indicating that there can be three kinds of relationships, such as A and/or B, which can be denoted as: the existence of A alone, the existence of A and B at the same time, and the existence of B alone. In addition, the character "/" herein generally means that the associated objects before and after it are in an "or" relationship.

In the descriptions of the examples of the present application, the term "at least one" means one or more, and "more than one" means two or more. "At least one of the following" or similar expressions refers to any combination of these items, including any combination of single or plural items. For example, "at least one of a, b, or c", or "at least one of a, b and c", can both mean: a, b, c, a-b (i.e. a and b), a-c, b-c, or a-b-c, where a, b, c can be single or plural, respectively.

It should be understood that in the various examples of the present application, the magnitude of the serial numbers of the above processes does not imply the order of execution, some or all steps can be operated in parallel or in order and the execution order of the processes should be determined by their functions and internal logic, and should not constitute any limitation on the implementation process of the examples of the present application.

The masses of relevant components mentioned in the specification of embodiments of the present application not only may refer to the specific contents of the components, but also may indicate a proportional relationship between the masses of the components. Therefore, as long as the contents of the relevant components are proportionally scaled up or scaled down according to the specification of the embodiments of the present application, all of the resulting contents are within the scope disclosed in the specification of the embodiments of the present application. Specifically, the mass described in the examples in the specification of the present application may be in mass units known in the chemical industry such as µg, mg, g, kg, etc.

Sodium-ion batteries have received widespread attention and research due to their abundant and widely distributed raw materials in nature. Similar to lithium-ion batteries, sodium-ion batteries realize the conversion between chemical energy and electric energy mainly through the deintercalation and intercalation of sodium ions between the positive electrode and the negative electrode. That is, during the charging process, sodium ions are deintercalated from the active material of the positive electrode, and then intercalated into the active material of the negative electrode after being transported through the electrolyte; during the discharging process, sodium ions are deintercalated again from the active material of the negative electrode and return to the active material of the positive electrode.

However, in reality, not all sodium ions deintercalated from the positive electrode active material during charging can return to the positive electrode active material. For example, during the charging process, after sodium ions deintercalated from the positive electrode active material reach the negative electrode active material, part of the sodium ions will form a solid electrolyte interphase film (SEI film) on the surface of the negative electrode active material and can no longer participate in subsequent cycles; another part of the sodium ions intercalated into the negative electrode active material cannot be deintercalated from the lattice of the negative electrode active material during the subsequent discharging process. These phenomena cause irreversible loss of sodium, which leads to a decrease in battery capacity and deteriorates the cycling performance of sodium-ion batteries.

Researchers have developed technical means of pre-sodiation of the positive or negative electrode to solve the above problems. The pre-sodiation methods include adding sodium powder or sodium foil into the positive or negative electrode by rolling or adsorption; alternatively, a pre-sodiation reagent (sodium-supplementing agent) is added to the positive electrode, negative electrode or electrolyte, and the sodium-supplementing agent is used to compensate for the lost sodium.

However, in practice, it has been found that sodium powder or sodium foil is highly reactive, has high requirements for the operating environment, and poses potential safety issues. Most sodium-supplementing agents have limited sodium supplementing effect during battery charging and discharging. They are unlikely to preferentially deintercalate sodium ions from the positive electrode active material during charging and discharging. Therefore, the positive electrode active material needs to provide sodium ions during the early charging and discharging process of the battery, which will also cause irreversible sodium loss of the positive electrode active material.

To address the above issues, embodiments of the present application add a specific Mn-based sodium-supplementing oxide as the sodium-supplementing agent Na_{q}MnₓM_{y}O₂ to the positive electrode plate. The sodium-supplementing agent contains unstableMn³⁺, which endows Na_{q}MnₓM_{y}O₂ with a highly unstable structure and facilitates sodium ion deintercalation. Moreover, the particle size of the sodium-supplementing agent is smaller than that of the positive electrode active material, granting it higher reaction activity than the positive electrode active material. It can preferentially deintercalate sodium ions ahead of the positive electrode active material to participate in electrochemical reactions. Therefore, under the action of the sodium-supplementing agent, the consumption of active sodium contained in the positive electrode active material during the initial charge-discharge process of the battery can be reduced, the structural damage to the positive electrode active material can be alleviated, and the cycling performance of the battery is thereby improved.

The positive electrode plate containing the sodium-supplementing agent according to the embodiments of the present application can be used for fabricating secondary batteries, and can thus be further applied to various electrical apparatuses.

The present application is further described below in combination with examples. It should be understood that these examples are merely used for illustrating the present application, instead of limiting the scope of the present application.

### [positive electrode plate]

In a first aspect, the present application provides a positive electrode plate, the positive electrode plate comprises a sodium-supplementing agent and a positive electrode active material, the sodium-supplementing agent comprises Na_{q}MnₓM_{y}O₂, where 1≤q≤1.2m 0.15≤x<0.45, y>0, 0.9≤x+y≤1, M comprises a transition metal element; the Dv50 of the sodium-supplementing agent is smaller than the Dv50 of the positive electrode active material.

Positive electrode active materials are important substances in the positive electrode plate that participate in the electrochemical reaction of the battery and can serve as a medium for ion transport in the electrochemical reaction. In the positive electrode plate of the present application, the positive electrode active material refers to the positive electrode active material for sodium-ion batteries. The sodium-supplementing agent comprises Na_{q}MnₓM_{y}O₂. The crystal morphology of Na_{q}MnₓM_{y}O₂ can be determined by X-ray diffraction. Meanwhile, the types, contents and proportions of each element can be obtained by means of an elemental analyzer. The subscripts q, x and y in the chemical formula can be further calculated through conversion.

Dv50 is a way of representing the particle size of a material. For the particle size distribution of materials, it is usually expressed by the percentage of particles within different particle size ranges relative to the total amount. There are multiple criteria for the determination methods of particle size distribution, such as number distribution, length distribution, area distribution, volume distribution, and weight distribution. Dv50 is a specific particle size distribution based on volume distribution, also known as median particle size. It refers to the particle size at which the cumulative volume distribution of particles is 50%, meaning that 50% of the particles have a diameter greater than this value and 50% of the particles have a diameter less than this value. The Dv50 of the particles can be obtained by referring to GB/T 19077-2016/ISO 13320:2009 "Particle size distribution - Laser diffraction methods.". In the embodiments of the present application, the particle morphologies of the sodium-supplementing agent and the positive electrode active material may each independently be regular spherical, ellipsoidal, polygonal, or other irregular shapes. For spherical particles, the particle size refers to the diameter thereof; for non-spherical particles or particles of other irregular shapes, the particle size is defined as the equivalent diameter thereof.

Embodiments of the present application adopt an Mn-based sodium-supplementing oxide Na_{q}MnₓM_{y}O₂ as a sodium-supplementing agent by incorporating it into the positive electrode plate, the Mn in Na_{q}MnₓM_{y}O₂ includes unstable Mn³⁺, which endows Na_{q}MnₓM_{y}O₂ with relatively high structural instability and facilitates sodium deintercalation (in this process, Mn³⁺ can be converted into stable Mn⁴⁺). Therefore, during the early-stage charging and discharging process of the battery, Na_{q}MnₓM_{y}O₂ can be used as the active sodium source consumed for forming the solid electrolyte interphase film (SEI film). This reduces the consumption of active sodium contained in the positive electrode active material during the early-stage charging and discharging process of the battery, alleviates structural damage to the positive electrode active material, and helps improve the cycling performance of the battery.

Meanwhile, small-particle-size materials generally have higher reaction activity than large-particle-size materials. In the embodiments of the present application, the particle size of the sodium-supplementing agent is set to be smaller than that of the positive electrode active material. This endows the sodium-supplementing agent with higher reaction activity than the positive electrode active material and faster kinetics during the early-stage charging and discharging process of the battery. Accordingly, sodium ions can be preferentially deintercalated from the sodium-supplementing agent prior to the positive electrode active material to support the formation of the SEI film. This further reduces the consumption of active sodium in the positive electrode active material and improves the cycling performance of the battery.

In some embodiments, 1≤q≤1.2; and optionally, 1≤q≤1.1. For example, q may be selected as any point value of 1.0, 1.1 and 1.2, or a range value between any two thereof. q can reflect the Na content in Na_{q}MnₓM_{y}O₂. Setting q within these ranges not only enables Na_{q}MnₓM_{y}O₂ to provide sodium ions and reduce the consumption of active sodium contained in the positive electrode active material during the initial charge-discharge process of the battery, which is beneficial to increasing the capacity of the positive electrode plate and improving the cycling performance of the battery, but also endows the sodium-supplementing agent with excellent structural stability after sodium deintercalation.

In some embodiments, 0.15≤x<0.45, and optionally, 0.2≤x≤0.44. For example, x may be selected as any point value of 0.15, 0.2, 0.25, 0.3, 0.35, 0.4 and 0.44, or a range value between any two thereof. x reflects the Mn content in Na_{q}MnₓM_{y}O₂. The Mn in Na_{q}MnₓM_{y}O₂ includes unstable Mn³⁺. Setting x within the above range enables Na_{q}MnₓM_{y}O₂ to contain a sufficient amount of Mn³⁺, endowing the structure of Na_{q}MnₓM_{y}O₂ with relatively high instability and facilitating sodium deintercalation. This is conducive to achieving the sodium supplementing effect. Furthermore, Mn exhibits different valence states in different structures and can adapt to conditions with varying Na contents. That is to say, it can adjust its own valence state to allow more Na to be incorporated into Na_{q}MnₓM_{y}O₂, which helps increase the Na content in Na_{q}MnₓM_{y}O₂, and further contributes to enhancing the capacity of the positive electrode plate and improving the cycling performance of the battery.

In some embodiments, y>0, and optionally, 0.5≤y≤0.8. For example, y may be selected as any point value of 0.5, 0.55, 0.6, 0.65, 0.7, 0.75 and 0.8, or a range value between any two thereof. y reflects the content of transition metal M in Na_{q}MnₓM_{y}O₂. Appropriate doping of M into Na_{q}MnₓM_{y}O₂ helps improve the structural stability of Na_{q}MnₓM_{y}O₂, and prevents serious structural collapse of Na_{q}MnₓM_{y}O₂ during the sodium deintercalation process.

In some embodiments, M includes one or more of Fe, Ni, Co, Cu, Al, Ti and V. Optionally, M includes at least one of Fe and Ni. These transition metals help enhance the structural stability of Na_{q}MnₓM_{y}O₂.

In some embodiments, M includes Fe and Ni, and the sodium-supplementing agent includes Na_{q}MnₓNi_{y1}Fe_{y2}O₂, where 1≤q≤1.2, 0.15≤x<0.45, y1>0, y2>0, 0.9≤x+y1+y2≤1. The combination of transition metals Ni and Fe can form a stable metallic layer structure with Mn. Moreover, studies have shown that the combined use of Ni and Fe is conducive to improving the energy density of the material.

In some embodiments, y1>0, and optionally, 0.3≤y1≤0.44. For example, y1 may be any point value of 0.3, 0.35, 0.4 and 0.44, or a range value between any two thereof. y2>0, and optionally, 0.24≤y2≤0.34. For example, y2 may be any point value of 0.24, 0.25, 0.3 and 0.34, or a range value between any two thereof. Combining Ni and Fe in a certain ratio is conducive to achieving better structural stability and an increase in energy density.

In some embodiments, the phase structure of the sodium-supplementing agent includes an O3 phase. The Mn-based sodium-supplementing oxide Na_{q}MnₓM_{y}O₂ belongs to layered oxides, which is formed by stacking TO₆ layered structures (in the embodiments of the present application, T includes Mn and transition metal element M). Na⁺ is intercalated and deintercalated between the stacked layers of TO₆. According to differences in the coordination environment of Na⁺, the phase structures of layered oxides can be classified into O-phase and P-phase. O means Na⁺ is in octahedral coordination and Na⁺ occupies octahedral sites; P means Na⁺ is in prismatic coordination and Na⁺ occupies triangular prismatic sites. In the crystal structure, Na⁺ and TO₆ structures are connected via edge-sharing in the O-phase, and connected through face-sharing and edge-sharing in the P-phase.

Based on the stacking sequence of oxygen layers, layered oxides can be further divided into P2 phase, O2 phase, P3 phase and O3 phase. The stacking mode of P2 is ABBA, that of O2 is ABAC (or ABCB), that of P3 is ABBCCA, and that of O3 is ABCABC. The numerals "2" and "3" represent the number of transition metal layers with different oxygen stackings in each unit cell.

The phase structure can be determined by X-ray diffraction analysis. For example, an X-ray powder diffractometer is used to test the sample to obtain its X-ray diffraction pattern. The phase structure of the sample can be identified by comparing the XRD diffraction peaks in the X-ray diffraction pattern with standard cards in XRD analysis software.

In different phase structures, Na⁺ has different coordination environments and contents. The phase structure of the sodium-supplementing agent according to the embodiments of the present application comprises an O3 phase. The O3 phase is a phase structure with a high sodium content, thereby enabling the sodium-supplementing agent to provide a large amount of sodium.

In some embodiments, the Dv50 of the sodium-supplementing agent is 6% to 75% of the Dv50 of the positive electrode active material, and optionally 6% to 25%. For example, the Dv50 of the sodium-supplementing agent is any point value of 6%, 10%, 15%, 20%, 25%, 30%, 35%, 40%, 45%, 50%, 55%, 60%, 65%, 70% and 75% of the Dv50 of the positive electrode active material, or a range value between any two thereof. The particle size of the sodium-supplementing agent is set to be smaller than that of the positive electrode active material. This endows the sodium-supplementing agent with higher reaction activity than the positive electrode active material and faster kinetics during the first-cycle charging and the early cycling process of the battery. Accordingly, sodium ions can be preferentially deintercalated from the sodium-supplementing agent prior to the positive electrode active material to support the formation of the SEI film. This reduces the consumption of active sodium in the positive electrode active material and improves the cycling performance of the battery. Meanwhile, when there is a certain difference between the Dv50 of the sodium-supplementing agent and the Dv50 of the positive electrode active material, the battery can exhibit superior cycling performance.

In some embodiments, the Dv50 of sodium-supplementing agent ranges from 0.5 µm to 6 µm, optionally from 1 µm to 3 µm. For instance, it may be any point value of 0.5 µm, 1 µm, 1.5 µm, 2 µm, 2.5 µm, 3 µm, 3.5 µm, 4 µm, 4.5 µm, 5 µm, 5.5 µm and 6 µm, or a range value between any two thereof. At this particle size, the sodium-supplementing agent possesses a high specific surface area and high surface energy, while also enabling a short sodium transport path, which is beneficial to enhancing its reaction activity and promoting sodium deintercalation.

In some embodiments, the mass ratio of sodium-supplementing agent to positive electrode active material is 1:(14-95), optionally 1:(18-46.5). For example, the mass ratio can be any point value of 1:14, 1:20, 1:25, 1:30, 1:35, 1:40, 1:45, 1:50, 1:55, 1:60, 1:65, 1:70, 1:75, 1:80, 1:85, 1:90, 1:95, or a range value between any two thereof. The mass ratio of the sodium-supplementing agent to the positive electrode active material affects the cycling performance of sodium-ion batteries. At the above mass ratio, sodium-ion batteries exhibit excellent cycling performance.

In some embodiments, the mass content of the sodium-supplementing agent in the active layer of the positive electrode plate is 1% to 6%, optionally 2% to 5%. For example, the mass content may be any point value of 1%, 2%, 3%, 4%, 5% and 6%, or a range value between any two thereof. The addition of a small amount of the sodium-supplementing agent according to the embodiments of the present application into the active layer contained in the positive electrode plate can effectively achieve a sodium supplementing effect and improve the cycling performance of the battery.

In some embodiments, the Dv50 of the positive electrode active material is 6 µm to 20 µm, optionally 6 µm to 10 µm. For example, it may be any point value of 6 µm, 7 µm, 8 µm, 9 µm, 10 µm, 12 µm, 14 µm, 16 µm, 18 µm and 20 µm, or a range value between any two thereof. At this particle size, the positive electrode active material exhibits lower reaction activity than the sodium-supplementing agent. It can slowly deintercalate sodium ions during the early-stage charging and discharging process of the battery rather than deintercalating sodium ions preferentially, thereby slowing down the consumption of active sodium in the positive electrode active material. Furthermore, by compounding the positive electrode active material and the sodium-supplementing agent with different particle sizes, the small-particle-size sodium-supplementing agent can fill the gaps between large-particle-size positive electrode active material particles, which helps increase the compacted density of the positive electrode plate and further improve the energy density of the positive electrode plate.

In some embodiments, the positive electrode active material may include one or more of layered oxides, polyanionic compounds, and Prussian blue analog compounds. For example, the layered oxide may include NaₘM¹_{z}O₂, where 0.4≤m≤0.9, optionally 0.8≤m≤0.9; and 0.9≤z≤1. M¹ includes a transition metal element. For example, m may be any point value of 0.4, 0.5, 0.6, 0.7, 0.8 and 0.9, or a range value between any two thereof; z may be any point value of 0.9, 0.92, 0.94, 0.96, 0.98 and 1, or a range value between any two thereof; M¹ includes one or more of Fe, Mn, Ni, Co, Cr, Sc, Ti, V, Cu and Zn. Optionally, the layered oxide may include Naₘ₁Mn_{z1}M_{z2}O₂, where 0.8≤m1≤0.9, 0.09<z1<0.45, and 0.9≤z1+z2≤1. For example, the layered oxide may include Na_{0.7}CoO₂, Na_{0.6}MnO₂, Na_{0.44}MnO₂, Na_{0.65}Mn_{0.75}Ni_{0.25}O₂, Na_{0.78}Ni_{0.23}Mn_{0.69}O₂, Na_{0.67}Mn_{0.67}Ni_{0.33}O₂, Na_{0.82}Mn_{0.33}Ni_{0.33}Fe_{0.33}O₂, etc.

Polyanionic compounds may be compounds containing sodium ions, transition metal ions and tetrahedral (YO₄)ⁿ⁻ anionic units; or polyanionic compounds may be compounds containing sodium ions, transition metal ions, tetrahedral (YO₄)ⁿ⁻ anionic units and halogen anions, where the halogen includes one or more of F, Cl and Br; or polyanionic compounds may be compounds containing sodium ions, tetrahedral (YO₄)ⁿ⁻ anionic units, polyhedral (ZO_{y})ⁿ¹⁺ units, and optional halogen anions. The transition metal and Z may each independently include one or more of Mn, Fe, Ni, Co, Cr, Cu, Ti, Zn, V, Zr and Ce; Y includes one or more of P, S and Si; n represents the valence state of (YO₄)ⁿ⁻, and n1 represents the valence state of (ZO_{y})ⁿ¹⁺. For example, the polyanionic compounds may include one or more of phosphates, pyrophosphates, sulfate-type compounds, and anion-doped compounds, such as one or more of olivine-type NaFePO₄, Na₂FeP₂O₇, NaFePO₄F, Na₃V₂(PO₄)₃, NaFeSO₄.

Prussian blue analog compounds may be compounds containing sodium ions, transition metal ions and cyanide ions (CN-), wherein the transition metal includes one or more of Mn, Fe, Ni, Co, Cr, Cu, Ti, Zn, V, Zr and Ce. For example, Prussian blue analog compounds may include NaₐM²_{b}[M³_{c}(CN)₆]_{d}, where 0<a≤2, 0<b≤1, 0<c≤1, 0.8≤d≤1, and M² and M³ each independently include transition metal elements. For example, a may be any point value of 0.4, 0.6, 0.8, 1, 1.2, 1.4, 1.6, 1.8 and 2, or a range value between any two thereof; b may be any point value of 0.2, 0.4, 0.6, 0.8 and 1, or a range value between any two thereof; c may be any point value of 0.2, 0.4, 0.6, 0.8 and 1, or a range value between any two thereof; d may be any point value of 0.8, 0.85, 0.9, 0.95 and 1, or a range value between any two thereof; M² and M³ may each independently include one or more of Ni, Cu, Fe, Mn, Co and Zn. For example, the Prussian blue analog compounds may include one or more of Na_{0.61}Fe[Fe(CN)₆]_{0.94}, BR-FeHCF, Na_{1.48}Ni[Fe(CN)₆]_{0.89}, NaNi_{0.05}Mn_{0.95}[Fe(CN)₆].

The positive electrode plate according to the embodiments of the present application is applicable to various positive electrode active materials, and can alleviate structural damage of these positive electrode active materials during battery cycling, thereby improving the cycling performance of the battery.

In some embodiments, the mass content of the positive electrode active material in the active layer of the positive electrode plate is 80% to 98%. For example, it may be any point value of 80%, 82%, 84%, 86%, 88%, 90%, 92%, 94%, 96% and 98%, or a range value between any two thereof. As the main substance participating in the electrochemical reaction in the positive electrode plate, the positive electrode active material provides capacity. It is understandable that a high mass content thereof in the positive electrode active layer is conducive to improving the energy density of the positive electrode plate.

In some embodiments, the compacted density of the positive electrode plate is 2.5 g/cm³ to 4 g/cm³, optionally 2.6 g/cm³ to 3.3 g/cm³. For example, the compacted density may be any point value of 2.5 g/cm³, 2.6 g/cm³, 2.8 g/cm³, 3 g/cm³, 3.2 g/cm³, 3.4 g/cm³, 3.5 g/cm³, 3.6 g/cm³, 3.8 g/cm³, 4 g/cm³, or a range value between any two thereof. Compacted density refers to the density of a product under a certain pressure. The positive electrode plate has its compacted density = areal density/(thickness of compacted positive electrode plate - thickness of current collector). The compacted density can be measured by a compacted density tester with reference to relevant standards, such as Appendix L Test Method for Powder Compacted Density of GB/T 24533-2019. Compacted density affects the energy density, electrolyte solution wettability, sodium ion transmission rate and other properties of the positive electrode plate. A higher compacted density corresponds to a larger mass of the positive electrode active material and sodium-supplementing agent per unit volume, which helps improve the energy density of the positive electrode plate. Meanwhile, compacted density reflects the porosity of the electrode plate. At an appropriate porosity, the electrode plate exhibits excellent electrolyte solution wettability and facilitates the transmission of sodium ions. The positive electrode plate according to the embodiments of the present application has a proper compacted density, which is not only beneficial to increasing the energy density of the electrode plate, but also improving its electrolyte solution wettability and accelerating the transmission of sodium ions.

In addition, the positive electrode plate usually further includes a conductive agent, a binder, and a positive electrode current collector. The conductive agent and the binder, together with the aforementioned sodium-supplementing agent and positive electrode active material, form the active layer of the positive electrode plate, and the active layer is disposed on at least one surface of the positive electrode current collector. The conductive agent is configured to collect micro-current between active materials and between active materials and the positive electrode current collector, so as to improve electronic conductivity. Meanwhile, the conductive agent can also facilitate the infiltration of the positive electrode plate by the electrolyte solution. The binder can improve the bonding strength between various substances in the active layer, and between the active layer and the positive electrode current collector. The positive electrode current collector is used to transport electrons.

Optionally, the mass content of the conductive agent in the active layer of the positive electrode plate is 0.5% to 5%, optionally 1% to 5%. For example, it may be any point value of 0.5%, 1%, 1.5%, 2%, 2.5%, 3%, 3.5%, 4%, 4.5% and 5%, or a range value between any two thereof, and may also be set as other contents as required.

The conductive agent may include, but is not limited to, one or more of acetylene black (SP), carbon nanotubes, conductive carbon black (super-P), Ketjen black, carbon fibers, and graphene.

Optionally, the mass content of the binder in the active layer of the positive electrode plate is 0.5% to 5%, optionally 1% to 7%. For example, it may be any point value of 0.5%, 1%, 2%, 3%, 4%, and 5%, or a range value between any two thereof, and may also be set as other contents as required.

The binder can include, but is not limited to, one or more of polyvinylidene fluoride, polyvinylidene fluoride-hexafluoropropylene copolymer, polyethylene oxide, polyimide, polytetrafluoroethylene, polybutyl acrylate, polyacrylonitrile, carboxymethyl cellulose, carboxymethyl cellulose salts, polyacrylic acid, polyacrylate salts, polyvinyl alcohol, sodium alginate, cyclodextrin, styrene-butadiene rubber, vinyl acetate resin, acrylic resin, and chlorinated rubber.

In the embodiments of the present application, the positive electrode current collector may include, but is not limited to, a metal current collector, a carbon current collector, a conductive resin current collector, a composite current collector of metal and resin, etc., more specifically, aluminum, copper, nickel, titanium, iron and their respective alloys, stainless steel, carbon fiber, carbon nanotubes (CNTs), graphite, etc. Optionally, the positive electrode current collector includes aluminum.

### [Preparation method for positive electrode plate]

The positive electrode plate according to the embodiments of the present application can be prepared by the following preparation method, comprising:
preparing a positive electrode slurry containing a sodium-supplementing agent and a positive electrode active material; coating the positive electrode slurry on at least one surface of a current collector, followed by drying and compaction to obtain the positive electrode plate.

The sodium-supplementing agent comprises Na_{q}MnₓM_{y}O₂, where 1≤q≤1.2, 0.15≤x<0.45, y>0, 0.9≤x+y≤1, and M includes transition metal elements; the Dv50 of the sodium-supplementing agent is less than the Dv50 of the positive electrode active material.

By adding the sodium-supplementing agent which comprises Na_{q}MnₓM_{y}O₂ and has a Dv50 smaller than that of the positive electrode active material during the preparation process of the positive electrode plate, on the one hand, the structural instability of Na_{q}MnₓM_{y}O₂ can be utilized. It can serve as the active sodium source consumed for forming the solid electrolyte interphase film, thereby reducing the consumption of active sodium contained in the positive electrode active material during the first-cycle charging, alleviating structural damage of the positive electrode active material, and contributing to improving the cycling performance of the battery. On the other hand, the sodium-supplementing agent with a small particle size exhibits higher reaction activity than the positive electrode active material with a large particle size, and possesses faster kinetics during the first-cycle charging and the early cycling process of the battery. Therefore, it can preferentially deintercalate sodium ions relative to the positive electrode active material to supply the formation of the SEI film, further reduce the consumption of active sodium in the positive electrode active material, and improve the cycling performance of the battery.

More specifically, the positive electrode plate can be prepared as follows:
mixing a sodium-supplementing agent, a positive electrode active material, a conductive agent and a binder (optionally, a thickener or other additives may be added as needed) with a solvent to form a positive electrode slurry;
coating the positive electrode slurry onto at least one surface of a current collector, followed by drying and compacting to obtain the positive electrode plate.

The solvent may include, but is not limited to, N-methylpyrrolidone (NMP). The compaction method may adopt one or more of hot pressing and cold pressing, and the applied pressure during the compaction process can be determined according to the target compacted density.

In addition, the sodium-supplementing agent in the embodiments of the present application can be prepared by a solid-phase method or other methods. For example, the sodium-supplementing agent can be prepared with reference to the following method:
performing co-calcination treatment on a Na source, a Mn source and an M source in accordance with the atomic ratio of Na_{q}MnₓM_{y}O₂.

By adopting the solid-phase method and performing co-calcination treatment on various raw materials, Na_{q}MnₓM_{y}O₂ can be obtained. This preparation method is simple and suitable for large-scale production.

The calcination temperature is in the range of 600°C to 1200°C, for example, including but not limited to any point value of 600°C, 650°C, 700°C, 750°C, 800°C, 850°C, 900°C, 950°C, 1000°C, 1050°C, 1100°C, 1150°C and 1200°C, or a range value between any two thereof. The holding time at the calcination temperature is 5 h to 24 h, for example, including but not limited to any point value of 5 h, 10 h, 12 h, 14 h, 16 h, 18 h, 20 h, 22 h and 24 h, or a range value between any two thereof. The calcination temperature and the holding time at such temperature can be directly set and controlled by calcination equipment such as a muffle furnace. Under appropriate calcination temperature and holding time, all raw materials can be fully melted, mixed and reacted to form a composite metal oxide of Na, Mn and M.

The aforesaid calcination step may be performed in an air or oxygen atmosphere.

Before the calcination treatment step, a step of mixing the Na source, Mn source and M source may be included. The mixing process includes, but is not limited to, one or more of mechanical stirring, grinding, and ball milling, in order to fully mix the raw materials and reduce the particle size of the materials.

Following the calcination step, a crushing step may also be included to give the sodium-supplementing agent the desired particle size.

In the preparation method of the sodium-supplementing agent, the Na source, Mn source and M source can be each independently selected from their respective soluble or non-soluble compounds. For example, the specific types of raw materials can be selected from the following compounds:
the Na source includes but is not limited to one or more of Na₂CO₃, NaHCO₃, NaOH, Na₂O₂ and other sodium salts;
the Mn source includes but is not limited to one or more of Mn₂O₃, Mn₃O₄, MnO, MnO₂;
the M source includes but is not limited to one or more of M-containing oxides, M-containing hydroxides, M-containing carbonates, and M-containing bicarbonates.

### [Sodium-ion secondary battery]

The above positive electrode plate containing the specific sodium-supplementing agent can be applied to fabricate sodium ion secondary batteries (hereinafter referred to as secondary batteries).

In a second aspect of the embodiments of the present application, a secondary battery is provided, wherein the secondary battery comprises the positive electrode plate according to the foregoing first aspect.

According to different packaging forms, secondary batteries are classified into battery cells, battery modules and battery packs. The secondary battery in the embodiments of the present application may include one or more of a battery cell, a battery module, and a battery pack.

The above positive electrode plate contains a sodium-supplementing agent with a special structure, and the sodium-supplementing agent is combined with the positive electrode active material at a specific particle size matching. When the positive electrode plate is applied to a secondary battery, it is conducive to improving the cycling performance of the secondary battery.

Generally, a secondary battery further includes a negative electrode plate, an electrolyte, a separator, an outer package and other components. Each component of the secondary battery is described below.

### 1. negative electrode plate

In a secondary battery, the negative electrode plate is generally isolated from the positive electrode plate (usually isolated by a separator). The negative electrode plate includes a negative electrode current collector, and optionally further includes a negative electrode active layer disposed on at least one side of the negative electrode current collector, where the negative electrode active layer contains a negative electrode active material.

The negative electrode current collector may include, but is not limited to, a metal or a composite current collector. For example, as metals, sodium, sodium alloys, copper, copper alloys, nickel, nickel alloys, titanium, titanium alloys, silver, silver alloys, etc. can be used. When sodium or sodium alloy is used as the negative electrode current collector, since sodium or sodium alloy itself can also be used as the negative electrode active material, the negative electrode plate may not contain a negative electrode active layer. Sodium or sodium alloy is both the current collector and the negative electrode active material.

The composite current collector may include a composite material of a polymer material and a metal. The polymer material may include, but is not limited to, polypropylene (PP), polyethylene terephthalate (PET), polybutylene terephthalate (PBT), polystyrene (PS), polyethylene (PE), and the like. The metal may include, but is not limited to, sodium, copper, copper alloys, nickel, nickel alloys, titanium, titanium alloys, silver, and silver alloys. Composite current collectors can be obtained by mixing polymer materials and metals, or they can be coated onto at least one side of a polymer material by electroplating, coating or other methods.

For the case where the negative electrode plate includes a negative electrode active layer, the negative electrode active material in the negative electrode active layer may include, but is not limited to, any one or more of carbon-based materials, alloy materials, titanium-based materials and sodium metal, in the form of a mixture or composite material. The carbon-based materials include, but are not limited to, one or more of graphite, soft carbon, hard carbon, carbon microspheres and carbon fibers; the alloy materials include, but are not limited to, one or more of sodium-tin alloy, sodium-germanium alloy and sodium-antimony alloy; the titanium-based materials include, but are not limited to, one or more of titanium dioxide, titanate and titanium phosphate.

The mass content of the negative electrode active material in the negative electrode active layer may be set as 85% to 98%, such as 95% to 98%, for example, any point value of 85%, 90%, 91%, 92%, 93%, 94%, 95%, 96%, 97% and 98%, or a range value between any two thereof.

The negative electrode active layer may further include one or more of a conductive agent and a binder. The conductive agent is configured to collect micro-current between active materials and between active materials and the current collector, so as to improve electronic conductivity. Meanwhile, the conductive agent can also facilitate the infiltration of the negative electrode plate by the electrolyte solution. The binder can improve the bonding strength between various substances in the active layer, and between the active layer and the current collector.

The mass content of the conductive agent in the negative electrode active layer may be set as 0.5% to 10%, for example, any point value of 0.5%, 1%, 2%, 3%, 4%, 5%, 6%, 7%, 8%, 9% and 10%, or a range value between any two thereof, and may also be set as other contents as required.

The conductive agent includes one or more of acetylene black (SP), carbon nanotubes, conductive carbon black (super-P), Ketjen black, carbon fibers, and graphene.

The mass content of the binder in the negative electrode active layer may be set as 0.5% to 10%, for example, any point value of 0.5%, 1%, 2%, 3%, 4%, 5%, 6%, 7%, 8%, 9% and 10%, or a range value between any two thereof, and may also be set as other contents as required.

The binder may include, but is not limited to, one or more of polyvinylidene fluoride, polyvinylidene fluoride-hexafluoropropylene copolymer, polyethylene oxide, polyimide, polytetrafluoroethylene, polybutyl acrylate, polyacrylonitrile, carboxymethyl cellulose, carboxymethyl cellulose salts, polyacrylic acid, polyacrylate salts, polyvinyl alcohol, sodium alginate, cyclodextrin, styrene-butadiene rubber, vinyl acetate resin, acrylic resin, and chlorinated rubber.

The negative electrode active layer further optionally includes a thickening agent, such as carboxymethyl cellulose (CMC). The mass content of the thickener in the positive electrode active layer may be set as 0.5% to 5%, for example, any point value of 0.5%, 1%, 1.5%, 2%, 2.5%, 3%, 3.5%, 4%, 4.5% and 5%, or a range value between any two thereof.

In the case where the current collector itself serves as the negative electrode active material, the negative electrode plate can be obtained simply by slitting the current collector.

For a negative electrode plate provided with a negative electrode active layer, the negative electrode active material may be coated on at least one side of the current collector by means of physical vapor deposition, chemical vapor deposition, electroplating and the like. Alternatively, the negative electrode plate may be fabricated through the processes of slurry preparation, coating, drying and compaction. For example, a negative electrode active material, a conductive agent and a binder (other additives may optionally be added as required) are mixed with a solvent to obtain a negative electrode slurry; the negative electrode slurry is coated on a current collector, followed by drying and compaction to afford the negative electrode plate. The solvent may include, but is not limited to, N-methylpyrrolidone (NMP). The compaction method may adopt one or more of hot pressing and cold pressing, and the applied pressure during the compaction process can be determined according to the target compacted density.

### 2. Electrolyte

A secondary battery further includes an electrolyte solution, and a positive electrode plate and a negative electrode plate are each independently in contact with the electrolyte. The electrolyte plays a role in conducting ions between the positive electrode plate and the negative electrode plate. The electrolyte may be liquid, gel or solid.

For example, an electrolyte solution may be adopted as the electrolyte, and the electrolyte solution comprises a sodium electrolyte salt and a solvent.

The sodium electrolyte salt includes one or more of sodium hexafluorophosphate, sodium bis(fluorosulfonyl)imide, sodium trifluoromethanesulfonate, sodium sulfide, sodium chloride, sodium fluoride, sodium sulfate, sodium carbonate, sodium phosphate, sodium nitrate, sodium difluorooxalatoborate, sodium pyrophosphate, sodium dodecylbenzenesulfonate, sodium lauryl sulfate, trisodium citrate, sodium metaborate, sodium borate, sodium molybdate, sodium tungstate, sodium bromide, sodium nitrite, sodium iodate, sodium iodide, sodium silicate, sodium lignosulfonate, sodium oxalate, sodium aluminate, sodium methanesulfonate, sodium acetate, sodium dichromate, sodium hexafluoroarsenate, sodium tetrafluoroborate, sodium perchlorate, and sodium trifluoromethanesulfonimide.

The solvent includes one or more of ethylene carbonate (EC), ethyl methyl carbonate (EMC), dimethyl ether (DME), diethylene glycol dimethyl ether, diethylene glycol diethyl ether, tetraethylene glycol dimethyl ether, 2 ,2 ,2 ,2-tetrafluoroethyl ether, ethylene glycol diethyl ether, triethylene glycol dimethyl ether, methyl trifluoroethyl carbonate (FEMC), dioxolane (DOL), acetonitrile (AN), fluorobenzene, triethyl phosphate (TEP), sulfolane, 2-methyltetrahydrofuran, tetrahydrofuran, dimethyl sulfoxide, and N,N-dimethylacetamide.

The electrolyte solution may further include an additive. For example, the additive may include a negative electrode film-forming additive or a positive electrode film-forming additive, or may further include an additive that can improve some performance of the secondary battery, such as an additive that improves overcharge performance of the secondary battery or an additive that improves high-temperature or low-temperature performance of the secondary battery.

### 3. Separator

The secondary battery further includes a separator, where the separator is disposed between the positive electrode plate and the negative electrode plate and can separate the positive electrode and the negative electrode. The separator can prevent electrons in the secondary battery from passing freely, thus preventing a short circuit due to contact between the electrodes, but can allow ions in the electrolyte to pass freely between the positive electrode plate and the negative electrode plate.

The separator may be selected from a porous separator with electrochemical stability and mechanical stability, such as a single-layer or multi-layer film of one or more of glass fiber, nonwoven fabric, polyethylene (PE), polypropylene (PP), and polyvinylidene fluoride (PVDF).

### 4. Outer package

The secondary battery may include an outer package. The outer package may be used to encapsulate the electrode assembly including the positive electrode plate, the negative electrode plate, and the separator, as well as the electrolyte.

The outer package of the secondary battery may be a hard shell, such as a hard plastic shell, an aluminum shell, or a steel shell; and may alternatively be a soft pouch, such as a bag-type soft pouch. The material of the soft pouch may be plastic, such as polypropylene, polybutylene terephthalate, and polybutylene succinate.

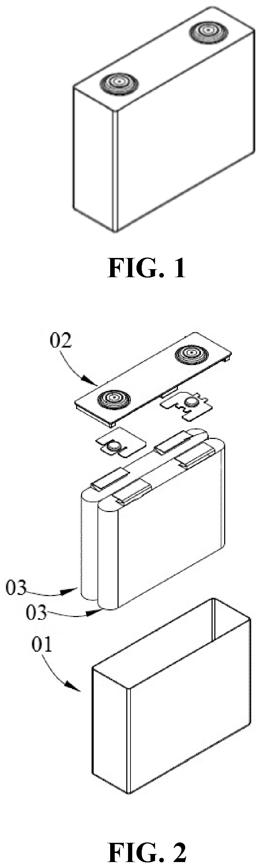

The shape of the outer package of the secondary battery may be cylindrical, square, or any other shape. For example, FIG. 1 shows a secondary battery with the shape of the outer package being a square structure as an example.

With reference to FIG. 2, the outer package may include a case 01 and a cover plate 02. The case 01 may include a bottom plate and side plates connected to the bottom plate, where the bottom plate and the side plates form an accommodating cavity by enclosing. The case 01 is provided with an opening in communication with the accommodating cavity, and the cover plate 02 can cover the opening to close the accommodating cavity. The positive electrode plate, the negative electrode plate, and the separator can be made into an electrode assembly 03 by a winding process or a stacking process. One or more electrode assemblies 03 are encapsulated in the accommodating cavity. An electrolyte solution wets the electrode assembly 03.

### 5. Battery cell, battery module, and battery pack

The secondary battery in the embodiments of the present application includes one or more of a battery cell, a battery module, and a battery pack.

According to different packaging forms, secondary batteries may be divided into battery cells, battery modules, and battery packs. The battery cell is the most basic unit of a secondary battery and includes an electrode assembly and an electrolyte. The electrode assembly generally includes a positive electrode plate, a negative electrode plate, a lithium supplementing electrode, and a separator. The positive electrode plate and the negative electrode plate are stacked alternately, and the separator is disposed between the positive electrode plate and the negative electrode plate to play a separating role, so as to obtain a bare cell. Alternatively, the bare cell may be obtained by winding. The bare cell is placed in an outer package, with an electrolyte solution being injected, and then encapsulated to obtain a battery cell.

A battery module is formed by integrating one or more battery cells. The battery module can provide higher voltage and capacity, and has an output of a specific function. One or more battery modules are mounted in a box of a battery, with a battery management system usually being added to form a battery pack. The battery pack is typically a product provided to users. Alternatively, one or more battery cells may be directly mounted in the box to form a battery pack.

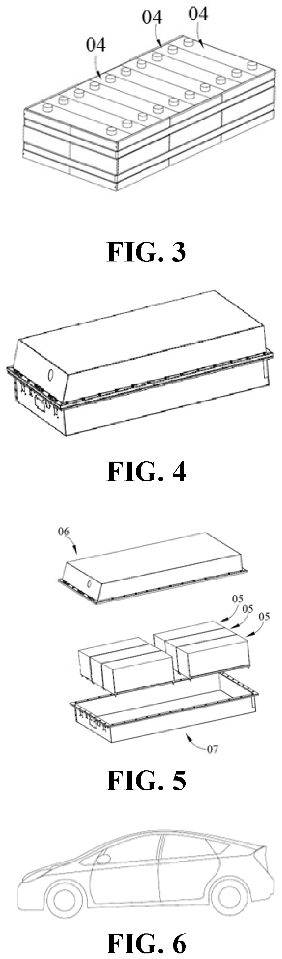

With reference to FIG. 3, it is a battery module as an example. In the battery module, a plurality of battery cells 04 may be sequentially arranged in a length direction of the battery module. Definitely, they may alternatively be arranged in any other mode. Furthermore, the plurality of battery cells 04 may be fixed by fasteners.

Optionally, the battery module may further include a shell having an accommodating space, in which the plurality of battery cells 04 are accommodated.

With reference to FIGS. 4 and 5, it is a battery pack as an example. The battery pack may include a battery box and a plurality of battery modules 05 provided in the battery box. The battery box includes an upper box 06 and a lower box 07, where the upper box 06 can cover the lower box 07 to form a closed space for accommodating the battery modules 05. The plurality of battery modules 05 can be arranged in the battery box in any mode.

### [electrical apparatus]

Embodiments of the present application further provide an electrical apparatus. The electrical apparatus comprises the secondary battery mentioned above.

The secondary battery disclosed in the embodiments of the present application can be used in the electrical apparatus using the secondary battery as a power source, or various energy storage systems using the secondary battery as an energy storage element, so as to be used to provide electric energy. The above-mentioned secondary battery has good cycling performance. Therefore, the secondary battery may be employed to stably provide electric energy for various electrical apparatuses, so as to improve the user experience of various electrical apparatuses.

The electrical apparatus may include, but is not limited to, a mobile phone, a tablet computer, a laptop, an electric toy, an electric tool, a battery car, an electric vehicle, a ship, a spacecraft, and the like. The electric toys may include a fixed or mobile electric toy, such as a game machine, an electric automobile toy, an electric ship toy and an electric aircraft toy. The spacecraft may include an aircraft, a rocket, a space shuttle, a spacecraft, and the like. For the electrical apparatus, the battery cell, the battery module, or the battery pack of the secondary battery may be selected according to use requirements thereof.

FIG. 6 shows an electrical apparatus as an example. The electrical apparatus is an all-electric vehicle, a hybrid electric vehicle, a plug-in hybrid electric vehicle, or the like. In order to meet the requirements of the electrical apparatus for high power and high energy density of a secondary battery, a battery pack or a battery module may be employed.

Examples of the present application will be described in detail hereinafter. The examples described below are exemplary and only used to explain the present application, and are not to be construed as limiting the present application. In examples in which no specific technologies or conditions are specified, technologies or conditions described in the literature in the art or product specifications are followed. The reagents or instruments used without manufacturer indicated are all commercially available conventional products.

### Example 1

### [positive electrode plate]

This example provides a positive electrode plate, an active layer of which includes a sodium-supplementing agent Na_{1.1}Mn_{0.44}Ni_{0.3}Fe_{0.24}O₂ and a positive electrode active material Na_{0.82}Mn_{0.33}Ni_{0.33}Fe_{0.33}O₂. Dv50 of the sodium-supplementing agent is 2 µm, and the mass content of the sodium-supplementing agent in the active layer is 3%. Dv50 of the positive electrode active material is 8 µm, and the mass content of the positive electrode active material in the active layer is 92% (the mass ratio of the sodium-supplementing agent to the positive electrode active material = 3:92 = 1:30.7).

A method for preparing the positive electrode plate includes the following steps:
The positive electrode active material, the sodium-supplementing agent, a binder (polyvinylidene fluoride, PVDF), and a conductive agent (conductive carbon) were sufficiently stirred and mixed evenly in a solvent (N-methyl pyrrolidone, NMP), to obtain a positive electrode slurry. The mass ratio of the positive electrode active material, the sodium-supplementing agent, the binder, and the conductive agent is 92:3:2:3. The positive electrode slurry was applied onto a current collector (aluminum foil), followed by oven drying and cold pressing, to obtain a positive electrode plate with a compaction density of 3 g/cm³.

### [Sodium-ion battery]

In this example, the above-mentioned positive electrode plate is used to assemble a sodium-ion battery. The sodium-ion battery includes the above-mentioned positive electrode plate, as well as a negative electrode plate, a separator, an electrolyte solution, and the like.

### (1) Electrolyte solution

A 1 mol/L NaPF₆ solution was used as the electrolyte solution, in which a solvent includes: ethylene carbonate (EC):propylene carbonate (PC):fluoroethylene carbonate (FEC) = 47.5:47.5:5 (volume ratio).

### (2) negative electrode plate

A negative electrode active material (hard carbon), a conductive agent (conductive carbon), and a binder (carboxymethyl cellulose, CMC) were sufficiently stirred and mixed evenly in deionized water, to obtain a negative electrode slurry. The mass ratio of the negative electrode active material, the conductive agent, and the binder is 95:2:3. The negative electrode slurry was applied onto a current collector (copper foil), followed by oven drying and cold pressing, to obtain a negative electrode plate.

### (3) Separator

A glass fiber film was used as the separator.

### (4) Sodium-ion battery

The positive electrode plate, the separator, and the negative electrode plate mentioned above were stacked in order and wound to obtain an electrode assembly. The electrode assembly was placed into a package shell, and the electrolyte solution was then added, followed by sealing, formation, and standing.

### Example 2

This example differs from Example 1 in that: the sodium-supplementing agent Na_{1.1}Mn_{0.44}Ni_{0.3}Fe_{0.24}O₂ is replaced with Na_{1.2}Mn_{0.2}Ni_{0.44}Fe_{0.34}O₂.

### Example 3

This example differs from Example 1 in that: the sodium-supplementing agent Na_{1.1}Mn_{0.44}Ni_{0.3}Fe_{0.24}O₂ is replaced with NaMn_{0.44}Ni_{0.3}Fe_{0.24}O₂.

### Example 4

This example differs from Example 1 in that: Dv50 of the sodium-supplementing agent is 0.5 µm.

### Example 5

This example differs from Example 1 in that: Dv50 of the sodium-supplementing agent is 6 µm.

### Example 6

This example differs from Example 1 in that: in the positive electrode plate, the total mass content of the sodium-supplementing agent and the positive electrode active material in the active layer remains unchanged, while the mass content of sodium-supplementing agent in the active layer is set to 1% (the mass ratio of the sodium-supplementing agent to the positive electrode active material = 1:94).

### Example 7

This example differs from Example 1 in that: in the positive electrode plate, the total mass content of the sodium-supplementing agent and the positive electrode active material in the active layer remains unchanged, while the mass content of sodium-supplementing agent in the active layer is set to 2% (the mass ratio of the sodium-supplementing agent to the positive electrode active material = 2:93 = 1:46.5).

### Example 8

This example differs from Example 1 in that: in the positive electrode plate, the total mass content of the sodium-supplementing agent and the positive electrode active material in the active layer remains unchanged, while the mass content of sodium-supplementing agent in the active layer is set to 5% (the mass ratio of the sodium-supplementing agent to the positive electrode active material = 5:90 = 1:18).

### Example 9

This example differs from Example 1 in that: in the positive electrode plate, the total mass content of the sodium-supplementing agent and the positive electrode active material in the active layer remains unchanged, while the mass content of sodium-supplementing agent in the active layer is set to 6% (the mass ratio of the sodium-supplementing agent to the positive electrode active material = 6:89 = 1:14.8).

### Comparative Example 1

This comparative example differs from Example 1 in that: the positive electrode plate includes no sodium-supplementing agent.

### Comparative Example 2

This comparative example differs from Example 1 in that: the sodium-supplementing agent Na_{1.1}Mn_{0.44}Ni_{0.3}Fe_{0.24}O₂ is replaced with Na_{0.7}Mn_{0.09}Ni_{0.6}Fe_{0.24}O₂.

### Comparative Example 3

This comparative example differs from Example 1 in that: the sodium-supplementing agent Na_{1.1}Mn_{0.44}Ni_{0.3}Fe_{0.24}O₂ is replaced with Na_{1.1}Mn_{0.5}Ni_{0.3}Fe_{0.19}O₂.

### Comparative Example 4

This example differs from Example 1 in that: Dv50 of the sodium-supplementing agent is 10 µm.

The capacity, initial efficiency, and cycling performance of the sodium-ion batteries in various examples and comparative examples are tested, and the results are shown in Table 1 to Table 3.

**Table 1. Electrochemical performance test results under the use of different sodium-supplementing agents**

| (Dv50 of the sodium-supplementing agent = 2 µm, Dv50 of the positive electrode active material = 8 µm, and the mass ratio of the sodium-supplementing agent to the positive electrode active material = 1:30.7) | | | | | | | | |
|---|---|---|---|---|---|---|---|---|
| | sodium-supplementing agent Na_{q}MnₓM_{y}O₂, where M includes Fe and Ni | | | | | Test Results | | |
| | Chemical formula | q | x | y | x+y | Discharge capacity (mAh/g) | Initial efficiency | Capacity retention rate (300 cycles) |
| | | 1≤q≤1.2 | 0.15≤x<0.45 | y>0 | 0.9≤x+y≤1 | | | |
| Example 1 | Na_{1.1}Mn_{0.44}Ni_{0.3}Fe_{0.24}O₂ | 1.1 | 0.44 | 0.54 | 0.98 | 110.1 | 87.1% | 89.2% |
| Example 2 | Na_{1.2}Mn_{0.2}Ni_{0.44}Fe_{0.34}O₂ | 1.2 | 0.2 | 0.78 | 0.98 | 108.4 | 87 | 88.7% |
| Example 3 | NaMn_{0.44}Ni_{0.3}Fe_{0.24}O₂ | 1 | 0.44 | 0.54 | 0.98 | 113.4 | 87.5% | 86.8% |
| Comparative Example 1 | / | / | / | / | / | 109 | 85.1% | 81.3% |
| Comparative Example 2 | Na_{0.7}Mn_{0.09}Ni_{0.6}Fe_{0.24}O₂ | 0.7 | 0.09 | 0.84 | 0.93 | / | / | 80.2% |
| Comparative Example 3 | Na_{1.1}Mn_{0.5}Ni_{0.3}Fe_{0.19}O₂ | 1.1 | 0.5 | 0.49 | 0.99 | / | / | 81.8% |

Table 1 shows that, compared with the case in which no sodium-supplementing agent is added to the positive electrode plate (Comparative Example 1), adding Na_{1.1}Mn_{0.44}Ni_{0.3}Fe_{0.24}O₂, Na_{1.2}Mn_{0.2}Ni_{0.44}Fe_{0.34}O₂, or NaMn_{0.44}Ni_{0.3}Fe_{0.24}O₂ with a mass content of 3% (the mass ratio of the sodium-supplementing agent to the positive electrode active material = 1:30.7) and Dv50 of 2 µm as a sodium-supplementing agent to the active layer of the positive electrode plate as in Example 1 to Example 3 may enable the sodium-ion battery to exhibit excellent cycling performance, with a capacity retention rate reaching up to 86.8% to 89.2% after 300 cycles; meanwhile, the sodium-ion battery exhibits high initial efficiency. Test data shows that adding a suitable sodium-supplementing agent to the positive electrode plate can effectively achieve sodium supplementation, which can reduce a sodium loss of the positive electrode active material during a first charging-discharging cycle (resulting in high initial efficiency), and help to improve the cycling performance of the battery. Moreover, it can be seen from comparison that, the discharge capacity and initial efficiency of the sodium-ion battery after a suitable sodium-supplementing agent is added to the positive electrode plate as in Example 1 to Example 3 are close to those of the case in which no sodium-supplementing agent is added, or even improved. This indicates that these sodium-supplementing agents cause no decrease in the capacity and initial efficiency of the sodium-ion battery.

In contrast, when the sodium-supplementing agent used has inappropriate proportions of elements, for example, when q and x in Comparative Example 2 are too small, that is, the proportions of Na and Mn are too small, or when x in Comparative Example 3 is too large, that is, the proportion of Mn is too large, the sodium-supplementing agent cannot effectively supplement sodium during charging and discharging of the sodium-ion battery, so that the cycling performance of the sodium-ion battery deteriorates significantly compared with that in Example 1 to Example 3.

**Table 2. Electrochemical performance test results under different sodium-supplementing agent particle sizes**

| (The chemical formula of the sodium-supplementing agent is Na_{1.1}Mn_{0.44}Ni_{0.3}Fe_{0.24}O₂, and the mass ratio of the sodium supplementing agent to the positive electrode active material is 1:30.7) | | | | | | |
|---|---|---|---|---|---|---|
| | Dv50 of the sodium-supplementing agent (µm) | Dv50 of the positive electrode active material (µm) | (Dv50 of the sodium-supplementing agent/Dv50 of the positive electrode active material)*100% | Discharge capacity (mAh/g) | Initial efficiency | Capacity retention rate (300 cycles) |
| Example 4 | 0.5 | 8 | 6.25% | 110.1 | 87.2% | 83.4% |
| Example 1 | 2 | 8 | 25% | 110.1 | 87.1% | 89.2% |
| Example 5 | 6 | 8 | 75% | 110.4 | 87.1% | 82.7% |
| Comparative Example 4 | 10 | 8 | 125% | 110.2 | / | 82.2% |

In Example 1, Example 4, Example 5, and Comparative Example 4, Dv50 of the sodium-supplementing agent used in the positive electrode plate varies, so that the cycling performance of the sodium-ion battery varies. It can be seen from the analysis in combination with Dv50 of the positive electrode active material that, when Dv50 of the sodium-supplementing agent is smaller than Dv50 of the positive electrode active material (Example 1, Example 4, and Example 5), the capacity retention rate of the sodium-ion battery after 300 cycles is relatively high; while when Dv50 of the sodium-supplementing agent is larger than Dv50 of the positive electrode active material (Comparative Example 4), the capacity retention rate of the sodium-ion battery after 300 cycles is reduced. The reason for this may be: when Dv50 of the sodium-supplementing agent is smaller than Dv50 of the positive electrode active material, the sodium-supplementing agent with a smaller particle size has higher reactivity during charging and discharging, so that sodium ions provided by it preferentially participate in the formation of an SEI film and another electrochemical reaction that may cause a loss of active sodium, thereby reducing the loss of active sodium in the positive electrode active material, enabling the sodium-ion battery to exhibit excellent cycling performance.

Meanwhile, when there is a difference between Dv50 of the sodium-supplementing agent and Dv50 of the positive electrode active material, for example, when Dv50 of the sodium-supplementing agent is 6.25% to 75% of Dv50 of the positive electrode active material, the capacity retention rate of the sodium-ion battery after 300 cycles is always above 82.7%. Furthermore, when Dv50 of the sodium-supplementing agent is 25% of Dv50 of the positive electrode active material, the capacity retention rate of the sodium-ion battery is even higher than those in other cases.

In addition, the test results show that the sodium-ion battery always has relatively high discharge capacity and initial efficiency when Dv50 of the sodium-supplementing agent varies, indicating that these sodium-supplementing agents cause no decrease in the capacity and initial efficiency of the sodium-ion battery.

**Table 3. Electrochemical performance test results under different sodium-supplementing agent amounts**

| (The chemical formula of the sodium-supplementing agent is Na_{1.1}Mn_{0.44}Ni_{0.3}Fe_{0.24}O₂, with Dv50 = 2 µm; and Dv50 of the positive electrode active material = 8 µm) | | |
|---|---|---|
| | Sodium-supplementing agent: positive electrode active material (mass ratio) | Capacity retention rate (300 cycles) |
| Example 6 | 1:94 | 84.0% |
| Example 7 | 1:46.5 | 87.9% |
| Example 1 | 1:30.7 | 89.2% |
| Example 8 | 1:18 | 88.3% |
| Example 9 | 1:14.8 | 84.3% |

The test results show that the amount of the sodium-supplementing agent has an impact on the cycling performance of the sodium-ion battery. When the mass ratio of the sodium-supplementing agent to the positive electrode active material is within the range of 1:(14.8-94), the capacity retention rate of the sodium-ion battery after 300 cycles first increases and then decreases as the mass proportion of the sodium-supplementing agent increases. When the mass ratio of the sodium-supplementing agent to the positive electrode active material is 1:(18-46.5), the capacity retention rate after 300 cycles is higher than those in other cases. Therefore, the sodium-ion battery may be enabled to exhibit better cycling performance by adjusting the mass ratio of the sodium-supplementing agent to the positive electrode active material.

Appendix: Specific test methods for various properties mentioned above are as follows:
(1) Dv50
   Dv50 was measured by a test using a laser particle size analyzer with reference to GB/T 19077-2016/ISO 13320:2009 Particle size analysis - Laser diffraction methods.
(2) Compaction density
   It was measured by a test using a compaction density tester with reference to Appendix L Test Method for Powder Compaction Density of GB/T 24533-2019.
(3) Capacity, initial efficiency, and capacity retention rate

At 25°C, the sodium-ion battery was allowed to stand for 30 min, and then charged to 4.0 V at a constant current rate of 0.33C. Subsequently, it was charged to a current of 0.05C at a constant voltage of 4.0 V, allowed to stand for 30 min, then discharged to 2 V at a constant current rate of 0.33C, and allowed to stand for 30 min. This constituted one charging-discharging cycle. A charging capacity C₁₀ and a discharging capacity C₂₀ in a first charging-discharging cycle were recorded, and the initial efficiency was calculated using the formula: initial efficiency = C₂₀/C₁₀×100%.

After the sodium-ion battery was subjected to 300 cycles according to the steps described above, a discharging capacity C₂₁ at this time was recorded, and the capacity retention rate after 300 cycles was calculated (capacity retention rate = C₂₁/C₂₀×100%).

Finally, it is to be noted that the above embodiments are only used for illustrating the technical solutions of the present application, not to limit them, and although the present application is described in detail with reference to the foregoing embodiments, those of ordinary skill in the art should understand that they can still modify the technical solutions described in the foregoing embodiments, or equivalently substitute some or all of the technical features therein, and these modifications or substitutions do not cause the essence of the corresponding technical solutions to depart from the scope of the technical solutions of the embodiments of the present application, and they should be covered by the scope of the claims and specification of the present application. In particular, the technical features mentioned in the various embodiments can be combined in any manner provided that there is no structural conflict. The present application is not limited to the particular embodiments disclosed herein, but rather includes all technical solutions falling within the scope of the claims.

## Claims

1. A positive electrode plate, comprising a sodium-supplementing agent and a positive electrode active material, wherein the sodium-supplementing agent comprises Na_{q}MnₓM_{y}O₂, wherein 1≤q≤1.2, 0.15≤x<0.45, y>0, 0.9≤x+y≤1, and M comprises a transition metal element; and Dv50 of the sodium-supplementing agent is smaller than Dv50 of the positive electrode active material.

2. The positive electrode plate according to claim 1, wherein 1≤q≤1.1.

3. The positive electrode plate according to claim 1 or 2, wherein 0.2≤x≤0.44.

4. The positive electrode plate according to any one of claims 1 to 3, wherein 0.5≤y≤0.8.

5. The positive electrode plate according to any one of claims 1 to 4, wherein M comprises one or more of Fe, Ni, Co, Cu, Al, Ti, and V.

6. The positive electrode plate according to any one of claims 1 to 5, wherein M comprises Fe and Ni, and the sodium-supplementing agent comprises Na_{q}MnₓNi_{y1}Fe_{y2}O₂, wherein 1≤q≤1.2, 0.15≤x<0.45, y1>0, y2>0, and 0.9≤x+y1+y2≤1.

7. The positive electrode plate according to any one of claims 1 to 6, wherein a phase structure of the sodium-supplementing agent comprises an O3 phase.

8. The positive electrode plate according to any one of claims 1 to 7, wherein Dv50 of the sodium-supplementing agent is 6% to 75%, optionally 6% to 25%, of Dv50 of the positive electrode active material.

9. The positive electrode plate according to any one of claims 1 to 8, wherein Dv50 of the sodium-supplementing agent is 0.5 µm to 6 µm, optionally 1 µm to 3 µm.

10. The positive electrode plate according to any one of claims 1 to 9, wherein Dv50 of the positive electrode active material is 6 µm to 20 µm, optionally 6 µm to 10 µm.

11. The positive electrode plate according to any one of claims 1 to 10, wherein the mass ratio of the sodium-supplementing agent to the positive electrode active material is 1:(14-94), optionally 1:(18-46.5).

12. The positive electrode plate according to any one of claims 1 to 11, wherein the mass content of the sodium-supplementing agent in an active layer contained in the positive electrode plate is 1% to 6%, optionally 2% to 5%.

13. The positive electrode plate according to any one of claims 1 to 12, wherein the positive electrode active material comprises one or more of a layered oxide, a polyanionic compound, and a Prussian blue compound; optionally, the layered oxide comprises NaₘM¹_{z}O₂, wherein 0.4≤m≤0.9, 0.9≤z≤1, and M¹ comprises a transition metal element.

14. A sodium-ion secondary battery, comprising the positive electrode plate according to any one of claims 1 to 13.

15. An electrical apparatus, comprising the sodium-ion secondary battery according to claim 14.
